**Europäisches Patentamt**

**European Patent Office**

**Office européen des brevets**

(19)

(11) **EP 1 124 233 A2**

(12) **EUROPEAN PATENT APPLICATION**

(43) Date of publication:
16.08.2001 Bulletin 2001/33

(51) Int Cl.$^7$: **G21B 1/00**

(21) Application number: 00126409.2

(22) Date of filing: 20.11.1991

(84) Designated Contracting States:
**AT BE CH DE DK ES FR GB GR IT LI LU NL SE**

(30) Priority: 12.12.1990 US 626496

(62) Document number(s) of the earlier application(s) in accordance with Art. 76 EPC:
**92901743.2 / 0 561 967**

(71) Applicant: **MILLS, Randell Lee**
**Lancaster, PA 17601 (US)**

(72) Inventor: **MILLS, Randell Lee**
**Lancaster, PA 17601 (US)**

(74) Representative: **UEXKÜLL & STOLBERG**
**Patentanwälte**
**Beselerstrasse 4**
**22607 Hamburg (DE)**

Remarks:
This application was filed on 05.12.2000 as a divisional application to the application mentioned under INID code 62.

(54) **Energy/matter conversion methods and structures**

(57)    Methods and structures to release heat energy from hydrogen atoms by stimulating their electrons to relax to a quantized potential energy level below that of the ground state via an electrochemical reactant(s) of redox energy resonant with the energy hole which stimulates this transition. Methods and structures to conform the electronic energy of the hydrogen atoms and the redox energy of the electrochemical reactant(s) to enhance the hydrogen electronic transition rate where the source of hydrogen atoms is aqueous electrolytic production on the surface of a cathode.

FIG.I

**EP 1 124 233 A2**

**Description**

Background of the Invention

As a result of the erroneous assumptions and incomplete or erroneous models and theories, the development of useful or functional systems and structures requiring an accurate understanding of atomic structure and energy transfer has been inhibited. The Schrodinger equation, for example, does not explain the phenomenon referred to as "cold" nuclear fusion, anomalous heat release and trace tritium production of certain electrolytic cells having a palladium cathode and a lithium electrolyte, which comprises the present invention. Thus, advances in materials and energy/ matter conversion is largely limited to laboratory discoveries having limited or sub-optimal commercial application.

SUMMARY OF THE INVENTION

A novel atomic theory is disclosed in *The Grand Unified Theory.* Mills and Farrell, Science Press, 1990, and in previous U.S. patent applications.

This invention relates to methods and apparatus for releasing energy from atoms as their electrons arc stimulated to relax to a lower energy level and small dimensions by providing an energy hole resonant with this transition according to a novel atomic model. The present invention further comprises methods and structures for repeating this shrinkage reaction to cause controlled nuclear fusion and shrunken atoms to provide new material with novel properties such as high thermal stability.

According to this model the electron of the hydrogen atom is a two dimensional spherical shell where each point on the shell follows a geodesic orbit about the central nucleus. For the ground state, the electric field is a radial central field inside the spherical shell and zero outside, where the radius of the shell is the Bohr radius, $a_0$. At this radius, the electron is nonradiative and force balance exists between the central field of the proton and the electron. Excited states of hydrogen arise from the capture of a photon(s) inside this spherical shell, a spherical resonator cavity. For the excited modes, the electric field is the sum of the ground state field and a time harmonic solution of LaPlace s equation in spherical coordinates. The electric field is non zero inside of an expanded resonator cavity where the radius at which nonradiation and force balance is achieved is an integer multiple of the Bohr radius. The photons which excite these modes have energy $[\frac{1}{n_1^2} - \frac{1}{n_2^2}]$ x 13.6 eV where $n_1$ and $n_2$ are integers and $n_2 > n_1$.

The radial ground state field can be considered as the superposition of Fourier components. The removal of Fourier components of energy n/2 x 27.2 eV where n is an integer gives rise to an electric field inside spherical shell which is a time harmonic solution of LaPlace's equations in spherical coordinates. In this case, the radius at which force balance and nonradiation are achieved is $\frac{a_0}{n}$

where n is an integer. In decaying to this radius a total energy of $[(n+1)^2 - n^2]$ x 13.6eV is released . This energy release process is the present invention.

In a preferred embodiment an energy hole of approximately 27 eV is provided by an electrochemical reactant (s), electrocatalytic couple, which causes heat to be released from hydrogen atoms as they are stimulated to relax to a quantized potential energy level below that of the ground state where the energy of the redox reaction of the electrocatalytic reactant(s) is resonant with that required to effect this transition, an energy hole of about 27 eV. The source of hydrogen atoms is the production on the surface of a cathode during electrolysis of water.

The conforming of the resonance between the redox energy of the electrocatalytic couple, the source of the energy hole, and the electron orbital energy, the sink of the energy hole, causes an increase in the hydrogen shrinkage reaction rate with a concomitant enhancement of the heat power. The reaction rate net power output can be increased by this mechanism as well as others by controlling the temperature, the electric field of the electrolysis cell as a function of time. the electrocatalytic couple which provides the energy hole, the counterion of the electrocatalytic couple, the pH of the solution, the surface area of the cathode, the current density of the cathode, the material composition of the cathode, the pressure of the hydrogen gas, and the temperature of the reaction. Further enhancement can be achieved by preventing the development of a hydrogen gas boundary layer between the surface of the cathode where the reacting hydrogen atoms are generated and the solution which contains the electrocatalytic couple. This can be achieved by applying vibration or ultrasound to the cathode and /or electrolytic solution and by the use of an electrolysis circuit where the current is intermittent. Further energy can be released by using deuterated or tritiated water which can undergo nuclear fusion.

Brief Description of the Drawings

Figure 1 is a schematic drawing of an energy reactor in accordance with the invention.
Figure 2 is a schematic drawing of an electrolytic energy cell reactor in accordance with the invention
Figure 3 is a schematic of a power controller for use in the reactor of Figure 2.

Figure 4 is a waveform diagram of the voltage waveform of the circuit of Figure 3.

Figure 5 is a waveform diagram of the current waveform of the circuit of Figure 3.

DETAILED DESCRIPTION OF THE INVENTION

Theory

For the hydrogen atom, the radius of the ground state orbitsphere is $a_o$. This orbitsphere contains no photonic waves and the centripetal force and the coulombic force balance. Thus,

$$\frac{m_e v_1^2}{a_o} = \frac{e^2}{4\pi\varepsilon_o a_o^2} \tag{8.1}$$

It was shown in the Excited States of the One Electron Atom Section (all References herein the Theory Section apply to *The Grand Unified Theory* by Randell Mills and John Farrell, 1990) that the electron orbitsphere is a resonator cavity which can trap electromagnetic radiation of discrete frequencies. The photon potential functions are solutions of LaPlace's equation. The photons decrease the nuclear charge to $1/n$ and increase the radius of the orbitsphere to $na_o$. The new configuration is also in force balance.

$$\frac{m_e v_n^2}{na_o} = \frac{e^2/n}{4\pi\varepsilon_o (na_o)^2} \tag{8.2}$$

We propose, however, that the orbit sphere resonator can trap photons which *increase* the nuclear charge and decrease the radius of the orbitsphere. This occurs, for example, when the orbitsphere couples to another resonator cavity which can absorb energy-we call this the absorption of an energy hole. The absorption of an energy hole destroys the balance between the centrifugal force and the increased central coulombic force. As a result, the electron is pulled toward the nucleus. And, if another allowed state (that obeys the boundary conditions) were not available, the electron would plunge into the nucleus.

Now, recall that for the He$^+$ ion (Z = 2; a one-electron atom) an allowed state exists at 0.5 $a_o$. It can be shown that if a ground state hydrogen atom emits a photon of about 27 eV. two photons are created-one is ejected and one remains in the orbitsphere. Ihe photonic wave in the orbitsphere creates an effective charge at the orbitsphere such that the electron experiences an ellective charge of +2e, and establishes a new centripetal/coulombic equilibrium at $r_{1/2}$ = 0.5 $a_o$. That is, the orbitsphere shrinks from $r_1 = a_o$ to $r_{1/2} = \frac{a_o}{2}$ .

$$V = - \frac{Z_{eff} e^2}{4\pi\varepsilon_o r_{1/2}} = - \frac{2 \times 2\, e^2}{4\pi\varepsilon_o a_o} = - 4{\times}27\ 178\text{eV} = - 108.70\text{eV} \tag{8.3}$$

The kinetic energy of the shrunken orbit sphere is $-\frac{1}{2}$ V, or T = 54.35 eV. The ground-state hydrogen atom has an (net) energy of -13.59 eV and the final hydrogen atom has an (net) energy of -54.42 eV (same as He$^+$), and $\Delta E$ = -40.83 eV for the reaction

$$H(Z_{eff} = 1; r_1 = a_o) \rightarrow H(Z_{eff} = 2; r_{1/2} = 0.5\, a_o). \tag{8.4}$$

That is, about 27 eV is lost with the absorption of the energy hole and about 14 eV is given off after absorption of the energy hole.

It is shown below that the resonance energy hole of a hydrogen atom which excites resonator modes of radial dimensions $\frac{a_o}{m+1}$ is

$$m \times 27.2\ \text{eV}, \tag{8.5}$$

where m = 1, 2, 3, 4, ... .

After resonant absorption of the hole, the radius of the orbitsphere, $a_o$, shrinks to $\frac{a_o}{m+1}$ and after p cycles of resonant shrinkage, the radius is $\frac{a_0}{mp+1}$.

The electric field of a hydrogen atom, or a deuterium atom, is zero for r > $r_n$, where $r_n$ is the radius of the orbitsphere of the electron (see Figure 8.1). Thus. as the orbitsphere shrinks, approaching nuclei experience a smaller Coulombic barrier and the internuclear distance (between two deuterium atoms, for example) shrinks as well. As the internuclear separation decreases, fusion is more probable. In muon catalyzed fusion, for example, the internuclear separation is reduced by about 200 (the muon to electron mass ratio) and the fusion rate increases by about 80 orders of magnitude. In a catalytic system that produces energy holes of 27.21 eV, deuterium atoms can be repeatedly shrunk and the internuclear separation can be much smaller than the muon reduction. These smaller internuclear distances yield much higher fusion rates. We call this fusion process Coulombic Annihilation Fusion (CAF).

It is important to note that the products of CAF are tritium, $^3H$, and protons, $^1H$. In hot fusion, deuterium nuclei collide randomly and produce about 50% $^3H$ plus $^1H$ and about 50% $^3He$ plus a neutron. In CAF fusion, however, the nuclei are moving slowly and will collide in the most favored Coulombic arrangement-with the two protons as far from each other as possible. These processes are shown schematically in Figure 8.2. See the Proton and Neutron Section for the equation of the orbitspheres of these nucleons.

Titanium(II) is one of the catalysts that can cause resonant shrinkage because the third ionization energy is 27.491 eV, m = 1 in equation (8.5). Thus, the shrinkage cascade for the pth cycle is represented by

$$27.491\ eV + Ti^{2+} + 2H\left[\frac{a_0}{p}\right] \rightarrow Ti^{3+} + e^- + 2H\left[\frac{a_0}{(p+1)}\right] + [(p+1)^2 - p^2]$$
$$\times\ 13.6\ eV \tag{8.7}$$

$$Ti^{3+} + e^- \rightarrow Ti^{2+} + 27.491\ eV$$

And, the overall reaction is

$$2H\left[\frac{a_0}{p}\right] \rightarrow 2H\left[\frac{a_0}{(p+1)}\right] + [(p+1)^2 - p^2]\times 13.6\ eV \tag{8.9}$$

Note that the energy given off as the atom shrinks is much greater than the energy lost to the energy hole. Furthermore, when fusion occurs even larger amounts of energy are liberated.

Rubidium(I) is also a potential catalyst. The second ionization energy is 27.28 eV.

$$27.28\ eV + Rb^+ + 2H\left[\frac{a_0}{p}\right] \rightarrow Rb^{2+} + e^- + 2H\left[\frac{a_0}{(p+1)}\right] + [(p+1)^2 - p^2]$$
$$\times\ 13.6\ eV \tag{8.10}$$

$$Rb^{2+} + e^- \rightarrow Rb^+ + 27.28\ eV \tag{8.11}$$

The overall reaction is the same as equation (8.9).

Less efficient catalytic systems hinge on the coupling of three resonator cavities. For example, the third ionization energy of palladium is 32.93 eV. This energy hole is obviously too high for resonant absorption. However, Li(I) releases 5.392 eV when it is reduced to Li. The combination of Pd(II) to Pd(III) and Li(I) to Li, then, has a net energy change of 27.54 eV.

$$27.54\ eV + Li^+ + Pd^{2+} + 2H\left[\frac{a_0}{p}\right] \rightarrow Li + Pd^{3+} + 2H\left[\frac{a_0}{(p+1)}\right] + [(p+1)^2 - p^2]$$
$$\times\ 13.6\ eV \tag{8.12}$$

$$Li + Pd^{3+} \rightarrow Li^+ + Pd^{2+} + 27.54\ eV \tag{8.13}$$

The overall reaction is the same as equation (8.9).

An efficient catalytic system that hinges on the coupling of three resonator cavities involves potassium. For example, the second ionization energy of potassium is 31.63 eV. This energy hole is obviously too high for resonant absorption. however, K(I) releases 4.34 eV when it is reduced to K. The combination of K(I) to K(II) and K(I) to K, then, has a net energy change of 27.28 eV.

$$27.28 \text{ eV} + K^+ + K^+ + 2H\left[\frac{a_0}{p}\right] \rightarrow K + K^{2+} + 2H\left[\frac{a_0}{(p+1)}\right] + [(p+1)^2 - n^2]$$
$$x \ 13.6 \ eV \tag{8.14}$$

$$K + K^{2+} \rightarrow K^+ + K^+ + 27.28 \text{ eV} \tag{8.15}$$

The overall reaction is the same as equation (8.9).

Energy Holes

In general, absorption of an energy hole will cause the orbitsphere to undergo a transition from one stable non-radiative radius to another stable non-radiative radius. The coulombic force is attractive, thus, the orbitsphere will shrink when the effective nuclear charge increases. The orbitsphere has an initial radius, $r_n$, initial effective nuclear charge, $Z_{eff}$, and initial velocity, $v_n$, given by the condition for non-radiation

$$2\pi(nr_1) = n\lambda_1 \qquad n = 1, \frac{1}{2}, \frac{1}{3}, \frac{1}{4}, \dots , \tag{8.16}$$

$$v_n = \frac{\vec{\hbar}}{m_e n a_o} \tag{8.17}$$

At force balance,

$$\frac{\vec{\hbar}^2}{m_e (r_n)^3} = \frac{Z_{eff} e^2}{4\pi\varepsilon_o (r_n)^2} \tag{8.18}$$

Shrinkage occurs because the effective nuclear charge increases by an integer, m, when equations (8.16) - (8.18) are satisfied by the introduction of an energy sink of a coupled resonator, such as an electron orbitsphere resonator cavity comprising an electrochemical couple. The coupled resonator provides energy holes and affects the shrinkage transition from the initial radius $a_o/(mp+1)$ and a nuclear charge of (mp+1) to the second radius

$$\left[\frac{a_0}{m(p+1) + 1}\right]$$

and a nuclear charge of m(p+1) + 1. The potential energy diagram is given in Figure 8.3. Energy conservation and the boundary condition that trapped photons must be a solution to LaPlace's equation determine that the energy hole to cause a shrinkage is given by equation (8.5). As a result of coupling, the deuterium atom emits a photon of m x 27.21 eV, and this photon is absorbed by the coupled resonator. Stated another way, the deuterium atom absorbs an energy hole of m x 27.21 eV. The energy hole absorption causes a second photon to be trapped in the deuterium atom electron orbitsphere. Recall from the Excited States of the One Electron Atom Section that electromagnetic radiation of discrete energy can be trapped in a resonator cavity. As shown previously the photonic equation must be a solution of LaPlace's equation in spherical coordinates. The photon field comprises an electric field which provides force balance and a nonradiative orbitsphere. The solution to this boundary value problem of the radial photon electric field is given by

$$\mathcal{E}_{ir\ photon\ j,l,m} = \frac{e}{4\pi\varepsilon_0}\ \frac{(na_0)^{\ell}}{r^{(\ell+2)}}\left(-1 + n\left[Y_{\ell}^{m}(\phi,\theta) - Y_{s}^{ms}\right]\right).$$

$$(8.19)$$

It is apparent from this equation that for $\ell = 0$ and given an initial radius of

$$\left[\frac{a_0}{(mp + 1)}\right]$$

and a final radius of

$$\left[\frac{a_0}{m(p+1) + 1}\right]$$

that the nuclear charge is increased by m with the absorption of an energy hole of m x 27.2 eV. The potential energy decreases by this energy; thus, energy is conserved. However, the force balance equation is not initially satisfied as the effective nuclear charge increases by m. Further energy is emitted as force balance is achieved at the final radius. The relativistic part of the kinetic energy of the orbitsphere is equal to the energy of the photon which is trapped during absorption of the energy hole (See Proton and Neutron Section). By replacing the initial radius with the final radius, and by increasing the charge by m in Equations (8.18).

$$[m(p+1) + 1]^3\frac{n^2}{m_e a_0^3} = [m(p+1)+1]^2\frac{((m(p+1)+1)e)e}{4\pi\varepsilon_0 a_0^2},\qquad (8.20)$$

force balance is achieved and the orbitsphere is non-radiative.

The energy balance for m = 1 is as follows. An initial energy of 27.21 eV is emitted as the energy hole absorption event. This increases the effective nuclear charge by one and decreases the potential by 27.21 eV. More energy is emitted until the total energy released is $[(p + 1)^2 - p^2]$ x 13.6eV.

In general, the resonance energy to cause shrinkage of the radius from $a_0$ to $a_0/(m + 1)$ is m x 27.21 eV, where m =1, 2, 3, 4. The resonant absorption of this energy hole causes the effective nuclear charge to increase by m. And, the energy released in going form infinity to $a_0/(m + 1)$ is (m + 1) x (m + 1) x 13.6eV or $(m + 1)^2$ x 13.6 eV.

Energy holes add. The corresponding effective charges resulting from the absorption of energy holes also add. Thus, any combination of energy holes which sums to m x 27.21eV where m is the same as the m for the final radius, $a_0/m+1$, leads to shrinkage to the same final radius of the orbitsphere.

Several examples of different energy holes affecting shrinkage and the corresponding effective nuclear charges, total energy released, and final radii of the orbitspheres going from infinity to the final radius, $a_0/(m + 1)$ are given in Table 8.1.

Table 8.1

| Radii, energies, energy holes, and energy released for several states of deuterium. | | | | | | |
|---|---|---|---|---|---|---|
| n | R | V(eV) | T(eV) | Zeff | energy hole (eV) | total energy released (eV) r = ∞ to r = R |
| - | $a_0$ | -27.2 | 13.6 | 1 | - | 13.6 |
| 1 | $a_0/2$ | -108.8 | 54.4 | 2 | 27.2 | 54.4 |
| 2 | $a_0/3$ | -244.9 | 122.4 | 3 | 54.4 | 122.4 |
| 3 | $a_0/4$ | -435.4 | 217.7 | 4 | 81.6 | 217.7 |
| 4 | $a_0/5$ | -680.2 | 340.1 | 5 | 108.8 | 340.1 |
| 5 | $a_0/6$ | -979.6 | 489.6 | 6 | 136.1 | 489.6 |
| 6 | $a_0/7$ | -1333.3 | 666.4 | 7 | 163.3 | 666.4 |

Table 8.1   (continued)

| Radii, energies, energy holes, and energy released for several states of deuterium. | | | | | | |
|---|---|---|---|---|---|---|
| n | R | V(eV) | T(eV) | Zeff | energy hole (eV) | total energy released (eV) r = ∞ to r = R |
| 7 | $a_o/8$ | -1741.4 | 870.4 | 8 | 190.5 | 870.4 |
| 8 | $a_o/9$ | -2204.0 | 1101.6 | 9 | 217.7 | 1101.6 |
| 9 | $a_o/10$ | -2721.0 | 1360.5 | 10 | 244.9 | 1360.5 |

Energy released for any transition is given by $\Delta E_{final}$ (∞ to R) - $\Delta E_{initial}$ (∞ to R)

Energy Reactor

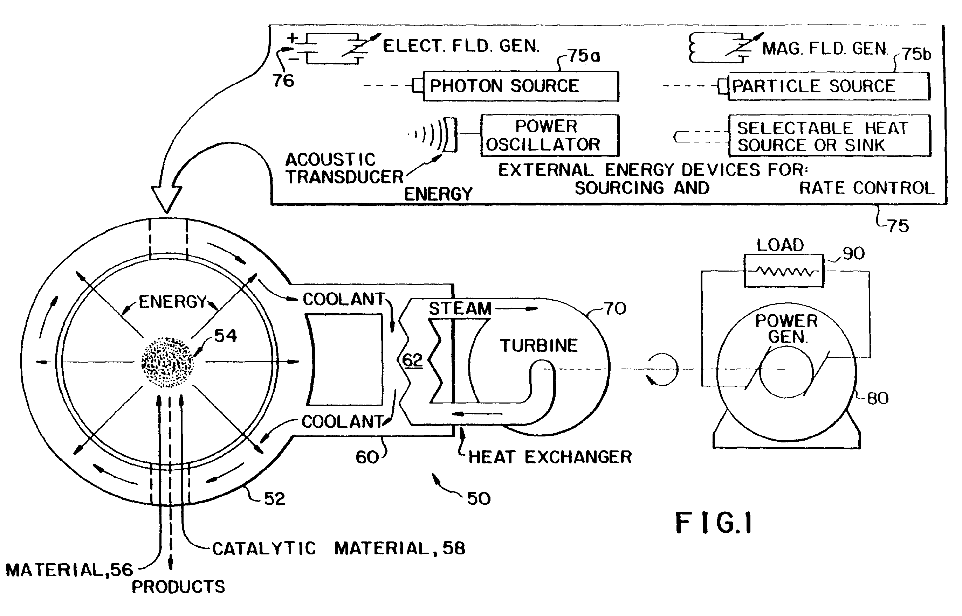

An energy reactor 50, in accordance with the invention is shown in Figure 1 and comprises a vessel 52 which contains an energy reaction mixture 54, a heat exchanger 60, and a steam generator 62. The heat exchanger 60 absorbs heat released by the said shrinkage reaction and fusion, when the reaction mixture, comprises of fusionable material, shrinks. The heat exchanger exchanges heat with the steam generator 62 which absorbs heat from the exchanger 60 and produces steam. The energy reactor 50 further comprises a turbine 70 which receives steam from the steam generator 62 and supplies mechanical power to a power generator 80 which converts the steam energy into electrical energy, which is received by a load 90 to produce work or for dissipation.

The energy reaction mixture 54 comprises an energy releasing material 56 including a source of hydrogen isotope atoms or a source of molecular hydrogen isotope, and a source of energy holes 58 which resonantly remove $\frac{n}{2}$ 27.21eV; where n is an integer, of energy, the resonance shrinkage energy, from hydrogen to effect shrinkage with a concomitant release of energy and shrunken atoms which can undergo fusion in the case where deuterium and/or tritium is used.

The source of hydrogen can be hydrogen gas electrolysis of water, hydrogen from hydrides, or hydrogen from metal-hydrogen solutions. In all embodiments, the source of energy holes is one or more of an electrochemical, chemical, photochemical, thermal, free radical, sonic, or nuclear reactions, inelastic photon or particle scattering reactions. In the latter two cases, the present invention of an energy reactor comprises a particle source 75b and/or photon source 75a to supply the said energy holes. In all reaction mixtures, a selected external energy device 75, such as an electrode may be used to supply an electrostatic potential or a current to decrease the activation energy of the resonant absorption of an energy hole. In another embodiment, the mixture 54, further comprises a surface or material to absorb atoms and/or molecules of the energy releasing material 56. Such surfaces or materials to absorb hydrogen, deuterium, or tritium comprise transition elements and inner transition elements including iron, platinum, palladium, zirconium, vanadium, nickel, titanium, Sc, Cr, Mn, Co, Cu, Zn, Y, Nb, Mo, Tc, Ru, Rh, Ag, Cd, La, Hf, Ta, W, Re, Os, Ir, Au, Hg, Ce, Pr, Nd, Pm, Sm, Eu, Gd, Tb, Oy, Ho, Er, Tm, Yb, Lu, Th, Pa, and U. In a preferred embodiment, a source of energy holes comprises a catalytic energy hole material 58 typically comprising electrochemical couples including the catalytic couples described in the Coulombic Annihilation Fusion Section of my previous U.S. patent application entitled "Energy/ Matter Conversion Methods and Structures, filed on April 28, 1989 which is incorporated by reference.

Thus, an exemplary energy reaction mixture which provides energy from the shrinkage reaction and from fusion is molecular deuterium, a salt of $Pd^{2+}$, and a lithium$^+$ salt. Palladium absorbs molecular deuterium and the $Pd^{2+}$/Li$^+$ catalytic system effect resonant shrinkage of deuterium to the point of fusion. In one embodiment, the lithium is $^6Li$ in which case the neutrons released from fusion of deuterium effects the fusion of $^6Li$ to helium. In other embodiments providing fusion, the fusionable material is one of any element of the periodic chart, and the energy of the holes of the said source of energy holes is resonant with the orbital shrinkage energy which is calculated using mechanics of the present invention and described for hydrogen in the Theory Section. In the preferred embodiment, $^2H$, $^3H$, or $^6Li$ is used as the fusionable material.

A futher embodiment is the vessel 52 containing a molten, liquid or solid solution of the catalytic couple(s) and a source of hydrogen including hydrides and gaseous hydrogen. In the latter case, the embodiment further comprises a means to dissociate the molecular hydrogen into atomic hydrogen including the transition or inner transition metals or electromagnetic radiation including UV light provided by photon source 75.

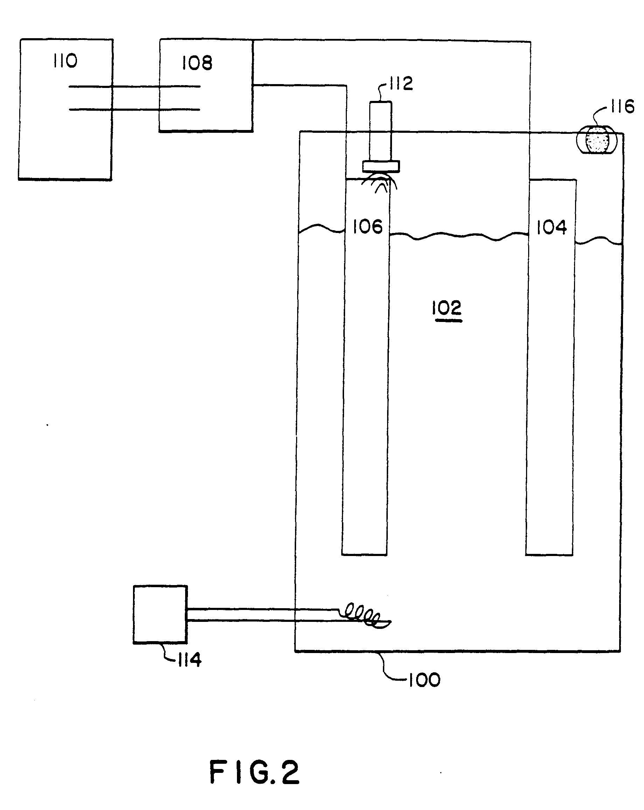

A preferred embodiment of the energy reactor of the present invention comprises an electrolyic cell forming the reaction vessel 52 of Figure 1 including a molten electrolytic cell. The electrolytic cell 100 is shown generally in Figure 2. An electric current is passed through the electrolytic solution 102 having an electrocatalytic couple providing energy holes equal to the resonance shrinkage energy (including the catalytic couples described in the Coulombic Annihilation Fusion Section of my previous U.S. Patent Application entitled "Energy/ Matter Conversion Methods and Structures," filed on April 28, 1989 which is incorporated by reference) by the application of a voltage to an anode 104 and cathode 106 by the power controller 108 powered by the power supply 110. Ultrasonic or mechanical energy may also be imparted to the cathode 106 and electrolytic solution 102 by vibrating means 112. Heat is supplied to the electrolytic solution 102 by heater 114. The pressure of the electrolytic cell 100 is controlled by pressure regulator means 116.

In vacuum, in the absence of external fields, the energy hole to stimulate a hydrogen atom at rest to undergo a shrinkage transition is n/2 X 27.21 eV where n is an integer. This resonance shrinkage energy is altered when the atom is in a media different from vacuum. An example is a hydrogen atom absorbed to the cathode 106 present in the aqueous electrolytic solution 102 having an applied electric field and an intrinsic or applied magnetic field provided by external magnetic field generator 75. Under these conditions the energy hole required is slightly different from 27.21 eV. Thus, an electrocatalytic couple is selected which has a redox energy resonant with the energy hole which stimulates the hydrogen shrinkage transition when operating under these conditions. In the case where a nickel or graphite cathode 106 is used to electrolyze an aqueous solution 102 where the cell is operating within a voltage range of 1.5 to 5 volts, the K+/K+ and Rb+ couples are preferred embodiments.

The cathode provides hydrogen atoms, and the shrinkage reaction occurs at the surface of the cathode where hydrogen atoms and the electrocatalytic couple are in contact. Thus. the shrinkage reaction is dependent on the surface area of the cathode. For a constant current density giving a constant concentration of hydrogen atoms per unit area, an increase in surface area increases the reactants available to undergo the shrinkage reaction. Also, an increase in cathode surface area decreases the resistance of the electrolytic cell which improves the electrolysis efficiency.

Hydrogen atoms at the surface of the cathode 106 form hydrogen gas which can form bubbles on the surface of the cathode. These bubbles act as an insulation layer between the hydrogen atoms and the electrocatalytic couple. The insulation can be ameliorated by vibrating the cathode and/or the electrolytic solution 102 or by applying ultrasound with vibrating means 112; and by adding wetting agents to the electrolytic solution 102 to reduce the surface tension of the water and prevent bubble formation. The use of a cathode having a smooth surface or a wire cathode prevents gas adherence, and an intermittent current, provided by an on-off circuit of power controller 108, provides periodic replenishing of hydrogen atoms which are dissipated by hydrogen gas formation followed by diffusion into the solution while preventing excessive hydrogen gas formation which could form an insulation layer.

The shrinkage reaction is temperature dependent. Most chemical reactions double their rates for each 10°C rise of temperature. Increasing temperature increases the collision rate between the hydrogen atoms and the electrocatalytic couple which will increase the shrinkage reaction rate. With large temperature excursions from room temperature, the kinetic energy distribution of the reactants can be sufficiently altered to cause the energy effecting the hydrogen shrinkage transition and the electrocatalytic redox reaction to conform to a more or lesser extent. The rate is proportional to the extent of conformation or resonance of these energies. The temperature is adjusted to optimize the energy production rate. In the case of the K+/K+ electrocatalytic couple a preterred embodiment is to run the reaction at a temperature above room temperature by applying heat with heater 114.

The shrinkage reaction is dependent on the current density. An increase in current density is equivalent , in some aspects, to an increase in temperature. The collision rate increases and the energy of the reactants increases with current density. Thus, the rate can be increased by increasing collision rate of the reactants; however, the rate may be increased or decreased depending on the effect of the increased reactant energies on the conformation of the redox and shrinkage energy hole. Also, increased current dissipates more energy by ohmic heating and may cause bubble formation. But, a high flow of gas may dislodge bubbles Which diminishes any hydrogen gas insulation layer. The current density is adjusted with power controller 108 to optimize the excess energy production. In a preferred embodiment the current density is in the range 5 to 400 milliamps per square centimeter.

The pH of the aqueous electrolytic solution 102 can affect the shrinkage reaction rate In the case that the electrocatalytic couple is positively charged, an increase in the pH will reduce the concentration of hydronium at the negative cathode: thus. the concentration of the electrocatalytic couple cations will increase. An increase in reactant concentration increases the reaction rate. In the case of the K+/K+ or Rb+ couple, a preferred pH is basic.

The counterion of the electrocatalytic couple of the electrolytic solution 102 can affect the shrinkage reaction rate by altering the energy of the transition state. For example, the transition state complex of the $K^+/K^+$ electrocatalytic couple with the hydrogen atom has a plus two charge and involves a three body collision which is unfavorable. A negative two charged oxyanion can bind the two potassiums: thus, it provides a neutral transition state complex of lower energy, whose formation depends on a binary collision which is greatly favored. The rate is dependent on the separation distance of the potassium ions as part of the complex with the oxyanion. The greater the separation distance, the less favorable is the transfer of an electron between them. A close juxtaposition of the potassium ions will increase the rate. The relationship of the reaction rate to the counterion in the case where the K+/K+ couple is used is :

$$OH^- < PO_4^{3-}, HPO_4^{2-} < SO_4^{2-} << CO_3^{2-}.$$

Thus, a planar negative two charged oxyanion including carbonate with three binding sites for K+ which provides close juxtaposition of the K+ ions is preferred as the counterion of the K+/K+ electrocatalytic couple. The carbonate counterion is also a preferred counterion for the Rb+ couple.

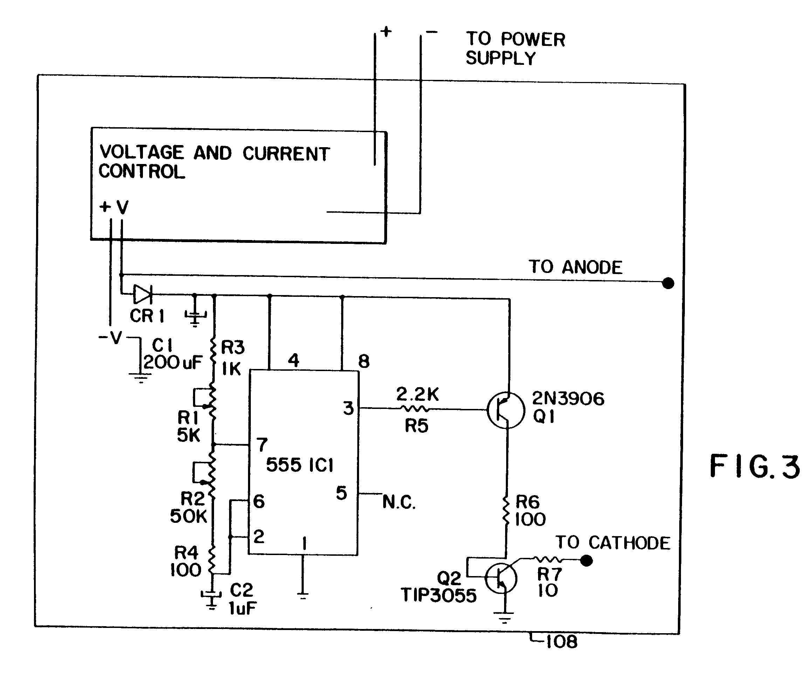

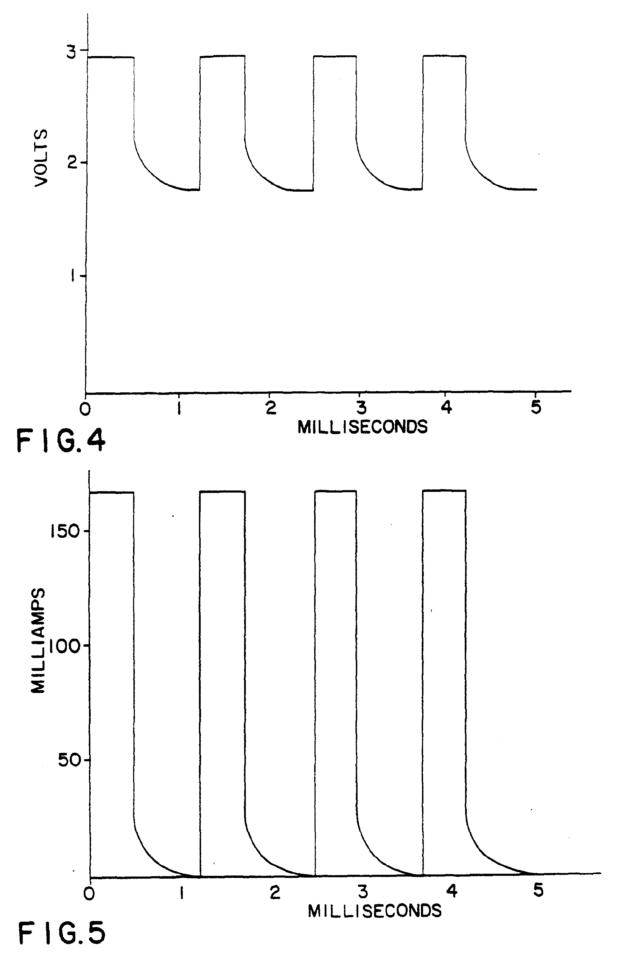

A power controller 108 comprising an intermittent current, on-off, electrolysis circuit will increase the excess heat by providing optimization of the electric field as a function of time which provides maximum conformation of reactant energies, provides an optimal concentration of hydrogen atoms while minimizing ohmic and electrolysis power losses and insulation layer formation. The frequency, duty cycle, peak voltage, step waveform, peak current, and offset voltage can be adjusted to achieve the optimal shrinkage reaction rate and coulombic relaxation power while minimizing ohmic and electrolysis power losses. In the case where the K+/K+ electrocatalytic couple is used with carbonate as the counterion; nickel or graphite as the cathode; and platinum as the anode, a preferred embodiment is to use an intermittent square-wave having an offset voltage of approximately 2.5 volts to 2.2 volts; a peak voltage of approximately 3 volts to 2.75 volts; a peak current of approximately 175 mA; approximately a 40% duty cycle and a frequency of approximately 720 Hz, although a range of between 300 Hz to 1500 Hz should perform satisfactorily. A preferred embodiment of the circuit of the power controller 108 is shown in Figure 3. The voltage waveform of this circuit is shown in Figure 4, and the current waveform of this circuit is shown in Figure 5.

The shrinkage reaction rate is dependent upon the composition of the cathode 106 and anode 104. Different anode materials have different overpotentials for the oxidation of water, which can affect ohmic losses. An anode of low overpotential will increase the efficiency. In the case of the K+/K+ electrocatalytic couple where carbonate is used as the counterion, platinum and nickel are preferred anodes. Nickel is a preferred anode for use in basic solutions with a nickel cathode. Nickel is inexpensive relative to platinum and fresh nickel is electroplated onto the cathode during electrolysis. Hydrogen atoms are reactants to produce coulombic relaxation energy. Thus, the cathode must efficiently provide a high concentration of hydrogen atoms. The cathode 106 is comprised of any conductor or semiconductor including transition elements and compounds, actinide and lantanide elements and compounds, and group IIIB and IVB elements and compounds. Transition metals dissociate hydrogen gas into atoms to a more or lesser extent depending on the metal. Nickel and titanium readily dissociate hydrogen molecules and are preferred embodiments. The cathode can alter the energy of the absorbed hydrogen atoms and affect the energy of the shrinkage reaction. A cathode material is selected which provides more favorable conformation of resonance between the electrocatalytic couple and the energy which effects the hydrogen shrinkage reaction. Also, coupling of resonator cavities and enhancement of the transfer of energy between them is increased when the media is a nonlinear media such as a magnetized ferromagnetic; thus, the cathode material can increase the reaction (coupling of the hydrogen and electrocatalytic couple resonator cavities) by providing a nonlinear magnetized media when a paramagnetic or ferromagnetic cathode is used or a magnetic field is applied with magnetic field generator 75. (Another nonlinear media is a magnetized plasma which comprises an embodiment with gaseous hydrogen atoms). Magnetic fields of and/or at the cathode can alter the hydrogen electron orbital energy and concomitantly alter the energy which triggers shrinkage. And, magnetic fields can perturb the energy of electrocatalytic reactions where the energy levels of the electrons involved in the reactions are affected by the magnetic field of the cathode or a magnetic field at the cathode to which the hydrogen atoms are absorbed. A preferred ferromagnetic cathode is nickel. The cathode material is selected to optimize conformation of the energies and coupling. In the case of the K+/K+ couple with carbonate as the counterion, the relationship of the cathode material to the reaction rate is:

Pi < Pd << Ti < Ni ,graphite(carbon)

This is the opposite order uf the energy released when these materials absorb hydrogen. Thus for this couple, the reaction rate is increased by using a cathode which weakly absorbs the hydrogen atoms with little perturbation of their electronic energies.

Further energy can be released by using deuterated or tritiated water as the aqueous electrolytic solution 102 which provide deuterium and tritium nuclei for fusion The atoms which have undergone shrinkage diffuse into the cathode lattice where shrunken atoms collide and undergo fusion. The probability of a fusion event arising from a collision is increased for deuterium or tritium atoms of smaller dimensions arising from multiple shrinkage reactions. A cathode 106 is used which will facilitate multiple shrinkage reactions of hydrogen atoms. One embodiment is to use a cathode which is fissured and porous to the electrocatalytic couple such that it can contact shrunken atoms which have diffused into a lattice, including a metal lattice. A further embodiment is to use a cathode of alternating layers of a material which provides hydrogen atoms during electrolysis including a transition metal or graphite and an electrocatalytic couple such that shrunken hydrogen atoms periodically or repetitively diffuse into contact with the electrocatalytic couple.

The shrinkage reaction is dependent on the dielectric constant of the media. The dielectric constant of the media alters the electric field at the cathode and concomitantly alters the energy of the reactants. Solvents of different dielectric constants have different solvation energies. and the dielectric constant of the solvent can also lower the overpotential for electrolysis and improve electrolysis efficiency. A solvent, including water, is selected for the electrolytic solution 102 which optimizes conformation of the energies of the electrocatalytic redox reaction and that effecting the hydrogen shrinkage reaction and maximizes the efficiency of electrolysis.

The solubility of hydrogen in the reaction solution is directly proportional to the pressure of hydrogen above the solution. Increasing the pressure increases the concentration of hydrogen atoms (reactants) at the cathode and thereby increases the rate. But, this also favors the development of a hydrogen gas insulation layer. The hydrogen pressure is controlled by pressure regulator means 116 to optimize the reaction rate.

Experimental

With reference to Figure 2, an electrolytic cell energy reactor 100 was assembled comprising a dewar covered with a .75 inch fitted rubber stopper, a 5 cm long by 75cm diameter graphite rod cathode 106, a 10 cm by 1 mm diameter spiraled platinum wire anode 104, a 0.57M aqueous $K_2CO_3$ electrolyte solution 102, a heater 116 comprising a 100ohm 1% resistor in a teflon tubing powered at constant voltage of 14.8 volts, a constant voltage power supply 110, and the power controller 108 having the circuit shown in Figure 3 The current voltage parameters were an intermittent square-wave having an offset voltage of approximately 2.5 volts; a peak voltage of approximately 3 volts; a peak current of approximately 175 mA; approximately a 40% duty cycle; and a frequency of approximately 720 Hz. The voltage and current waveforms are shown in Figures 4 and 5, respectively. This energy reactor typically yielded 7.5 times the heat power output as the electrolysis heat power input as determined by calibration of the dewar vessel during operation using the differential calorimetry method.

When the graphite cathode was replaced by a 7.5 cm wide by 5 cm long by 0.125 mm thick nickel foil spiral of 9 mm diameter and 0.5 mm pitch and the other conditions and the apparatus were kept constant, the yield ratio of output over input was typically 7.5. When the cathode comprising a 7.5 cm wide by 5 cm long by 0.125 mm thick nickel foil spiral of 9 mm diameter and 0.5 mm pitch was replaced by a 2 cm wide by 5 cm long by 0.125 mm thick nickel foil cathode and the other conditions and the apparatus were kept constant, the yield ratio of output over input was typically 5.5. The yield ratio of output over input was typically 3.5 when the heater was off. When the 0.57M aqueous $K_2CO_3$ electrolyte solution 102 was replaced by $Na_2CO_3$, the yield ratio of output over input was typically 1.0.

An electrolytic cell energy reactor 100 was assembled comprising a 200 ml tall form beaker covered with parafilm, a 5 cm long by 2 cm wide by 0.125 mm thick nickel foil cathode 106, an anode 104 comprising a 25 cm long 32 gauge platinum wire spiraled about a 2 mm outer diameter glass capillary, a 0.57M aqueous $K_2CO_3$ electrolyte solution 102, and a constant voltage supplied by power supply 110. The current voltage parameters were a continuous voltage of approximately 4 volts and a current of approximately 300 mA. This energy reactor typically yielded 1.8 times the heat power output as the electrolysis heat power input as determined by calibration of the dewar vessel during operation using the differential calorimetry method. When the polarity was reversed making the Pt wire the anode the yield ratio of output over input was typically 1.1. When the 0.57M aqueous $K_2CO_3$ electrolyte solution 102 was replaced by KOH, the yield ratio of output over input was typically 1.1. When the 0.57M aqueous $K_2CO_3$ electrolyte solution 102 was replaced by $K_2SO_4$ or $K_2HPO_4$, the yield ratio of output over input was typically 1.3. When the 0.57M aqueous $K_2CO_3$ electrolyte solution 102 was replaced by $Na_2CO_3$, the yield ratio of output uver input was typically 1.0.

**Claims**

1.   A method of releasing energy, comprising the steps:

   selecting an element of matter having a nucleus and at least one electron comprising an electron orbital;
   determining the resonance shrinkage energy of the electron orbital and the energy hole which will stimulate the electron to undergo a resonance shrinkage transition to relax to a quantized potential energy level below that of the ground state, providing an orbital of smaller dimensions forming a shrunken orbital of the element of matter;
   providing an energy hole substantially equal to the resonance shrinkage energy of the element of matter;
   juxtaposing said element of matter and said energy hole, wherein;
   energy is released as the electron of the element of matter is stimulated by said energy hold to undergo at least one shrinkage transition.

2.   The method of claim 1, wherein the step of providing an energy hole comprises providing a catalytic system including an electrochemical reactant comprising at least one of a cation and an anion.

3.   The method of claim 1, wherein said step of providing an energy hole comprises selecting a second element of matter having an ionization energy substantially equal to the resonance shrinkage energy of said first element of matter.

4. Apparatus for providing the release of energy, comprising:

means for providing an element of matter in a selected volume, said element having a nucleus and at least one electron comprising an orbital having a resonance shrinkage energy; and

a means introduced into said selected volume for providing an energy hole in juxtaposition with said element of matter, said energy hole having magnitude substantially equal to said resonance shrinkage energy, wherein: energy is released from said element of matter when the orbital of said element of matter is reduced due to removal of orbital energy by said energy hole permitting the electron of the element of matter to be stimulated to undergo at least one shrinkage transition providing the release of energy.

5. The apparatus of claim 4, wherein:
said means providing an energy hole is a substance comprising at least a second element of matter having an ionization energy substantially equal to the resonance shrinkage energy of said first element of matter.

6. The apparatus of claim 4, wherein said means providing an energy hole comprises a catalytic system including an electrochemical reactant comprising at least one of a cation and an anion.

7. The apparatus of claim 4, wherein:

said first element of matter comprises $1_H$; $2_H$ and $3_H$; and
said second and said additional element comprise $K^+$; and $K^+$.

8. The apparatus of claim 4, further including:
an electrolytic cell comprising at least a cathode; an anode; an electrolytic solution; a vessel; a power supply providing a current; a means to control said current; an external energy source; and a means to control the pressure of the vessel.

9. The apparatus of claim 8, wherein:
the cathode is nickel or graphite.

10. The apparatus of claim 8, wherein:
the anode is platinum or nickel.

11. The apparatus of claim 8, wherein:
the electrolytic solution is aqueous potassium carbonate.

12. The apparatus of claim 8, wherein:
the aqueous electrolytic solution is basic.

13. The apparatus of claim 8, wherein:
the current control means provides intermittent current of an intermittent square-wave having an offset voltage of approximately 2.5 volts to 2.2 volts; a peak voltage of approximately 3 volts to 2.75 volts; a peak current of approximately 175 mA; approximately a 40% duty cycle; and a frequency of approximately 300 Hz to 1500 11z.

14. The apparatus of claim 8, wherein:
the electrolysis cell is operated at a temperature above room temperature.

15. An apparatus of claim 4, wherein:
the source of an energy hole is a single cation, neutral atom, or anion or a single molecule which is a cation, neutral molecule or anion, or is a combination of said species wherein the said energy hole iS substantially equivalent to n/2 27.21 eV where n is an integer.

FIG.1

FIG.2

FIG.3

FIG.4

FIG.5